# EUROPEAN PATENT SPECIFICATION

(11) **EP 2 072 139 B1**
(45) Date of publication and mention of the grant of the patent: **13.05.2020**
(21) Application number: 07123889.3
(22) Date of filing: 21.12.2007
(51) Int. Cl.: B02C 18/18, B02C 18/14, A01F 29/06, A01G 3/00

(54) **Improvements in or relating to shredder cutters**
Verbesserungen an oder im Zusammenhang mit Häckselschneidern
Améliorations des ou en relation avec des couteaux de déchiqueteuse

(43) Date of publication of application: 24.06.2009
(60) Divisional application: 20162875.7
(73) Proprietor: Robert Bosch GmbH, 70442 Stuttgart (DE)
(72) Inventor: Beadman, Robert, Stowmarket, Suffolk, IP14 2AU (GB); Simpson, Peter, Lower Cambourne, Cambridgeshire, CB3 6EX (GB); Kocsis, Timea, Lower Cambourne, Cambridgeshire, CB3 6EX (GB); Fowles, Andrew, Essex, CO4 3FG (GB); Heywood, Peter, Norton, IP31 3LE (GB); Smer, Bashiri, Stowmarket, Suffolk, IP14 2AU (GB)

(56) References cited:
- WO-A-98/34491
- GB-A- 2 080 145
- US-A- 3 989 196
- US-A- 5 836 528

## Description

The present invention relates to improvements in or relating to cutters for shredders, in particular to cutters for shredders, in particular for vegetation shredders, suitably of the type used for shredding tree branches and garden waste. The present invention relates to a novel cutter and method for manufacturing the cutter and to a shredder including the cutter.

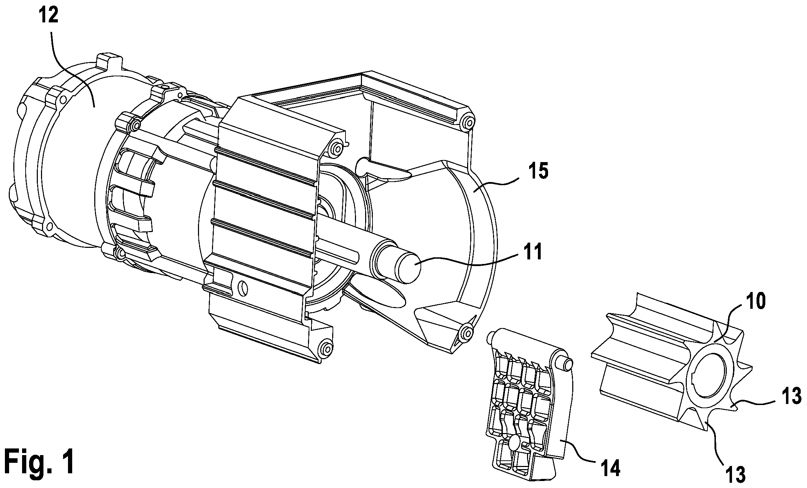

Figure 1 shows a typical prior art shredder assembly for a vegetation shredder. The assembly comprises a cylindrical shredder element 10 carried by a shaft 11 of a reduction gear box connected to an electric motor 12 and thereby caused to rotate. Element 10 includes teeth 13 which, in use, bear against a reaction plate 14. The assembly is surrounded by a housing 15 which acts to contain any vegetation impacting upon the assembly and direct it to be crushed and cut between the shredder element 10 and reaction plate 14. In a typical shredder, shredder element 10 has eight blades and rotates at around 40 revolutions per minute.

A disadvantage of such arrangements is that crushing, whilst useful for breaking fibres, is comparatively inefficient in its use of the power available compared with cutting. Accordingly, alternative arrangements have been proposed. One such arrangement is described in US 5 836 528. The shredder cutter is generally of frusto-conical appearance comprising a cast aluminium hollow rotatable drum formed with a plurality of axially elongate tapering apertures angularly spaced around the body of the drum. A steel blade is secured adjacent to each aperture at an inclination of between 30° and 45° to the base of the frusto-conical drum. This arrangement is effective but complex to manufacture and to maintain in good working order ensuring correct orientation of the blades is maintained. Accordingly, there is a need to provide an alternative shredding assembly for a vegetation shredder.

In one aspect, the present invention provides a cutting element according to claim 1.

Suitably, the proximal support element is in the form of a disc.

Suitably, the distal support element is in the form of a ring.

Preferably, each blade is aligned to taper inwardly from the base towards the proximal support element.

Preferably, the cutting element is formed with elongate apertures between adjacent blades.

Preferably, the distal end includes a circumferential ring joining the end faces of the blades.

Preferably, each blade has a body having an axis at an angle of 20° to 40° to the radius of the cutting element, more preferably 23° to 37°.

The present invention also provides a method of manufacturing a vegetation shredder cutting element in accordance with claim 5.
Preferably, the cutting element is cast from steel. More preferably, the cutting element is cast from a low carbon steel. Even more preferably, the cutting element is cast from low carbon alloy steel.
Preferably, the method further comprises a step of hardening, more preferably gas carbonitriding or induction hardening, most preferably, gas carbonitriding.

Suitably, the cutting element is formed having a surface hardness of 55HRC.

The present invention also provides a vegetation shredder in accordance with claim 8.

Preferably the distal end of the cutting element is supported by a bearing having a low coefficient of friction. More preferably, the coefficient of friction is 0.1 or less, even more preferably 0.05 or less. Most preferably, the bearing is a PTFE loaded polymer-faced metal-backed plain bearing of low friction.

Preferably, the vegetation cutter further comprises a reaction plate formed with a front face having two distinct surfaces such that their joint intersection with the cutter diameter generally forms a V-shape.

Preferably, the lowest point of the V-shaped form of the intersection is provided from 15 to 30mm from the proximal end of the cutting element.

Preferably, a first surface of the reaction plate has a profile edge which extends over a degree of cutter rotation of from 20° to 35°, preferably about 30°.

Preferably, a second surface of the reaction plate has a profile edge which extends over a degree of cutter rotation of from 0° to 10°.

The above and other aspects of the present invention will now be illustrated, by way of example only, with reference to the accompanying drawings, in which:
Figure 1 is an exploded view showing a typical prior art shredder assembly;
Figure 2 is a perspective view of an embodiment of a vegetation shredder in accordance with the present invention;
Figure 3 is a perspective view of an embodiment of a shredder cutter element in accordance with the present invention;
Figure 4 is a sectional end view along line IV-IV of Figure 7;
Figure 5 is an exploded perspective view of a shredder assembly incorporating the cutter element of Figure 3;
Figure 6 is an exploded view of the shredder cutter of Figure 3 with a reaction plate;
Figure 7 is a plan view of the cutter and reaction plate of Figure 6;
Figure 8 is a detail front and side view of the reaction plate of Figures 6 and 7; and
Figure 9 is a sectional view through a assembled shredder assembly.

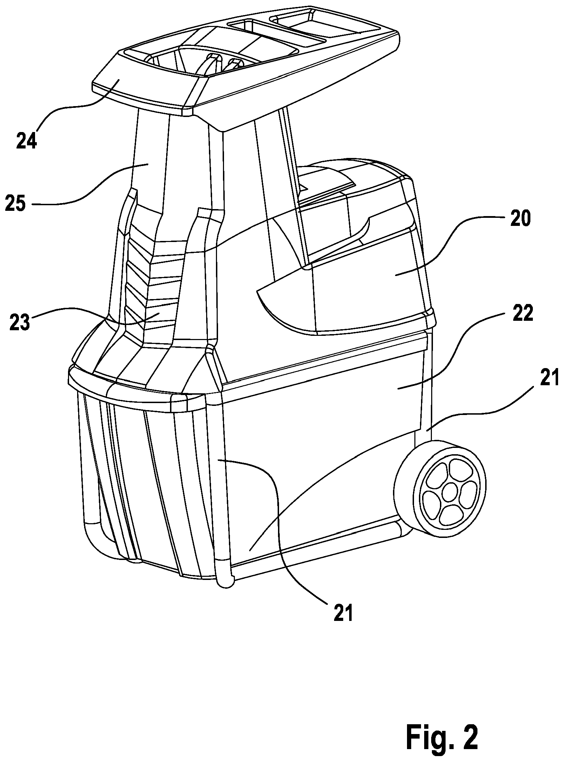

Figure 2 shows a vegetation shredder including a shredder body 20 housing a shredder cutter assembly mounted on a frame 21 above a collection box 22 in operative communication with an outlet 23 of the shredder body 20. The shredder body 20 has a feed inlet or hopper 24 for receipt of vegetation to be shredded, such as branches or twigs of a tree. Feed inlet 24 is spaced from the cutter assembly by means of a feed chute 25, to prevent user access to the cutter assembly during use.

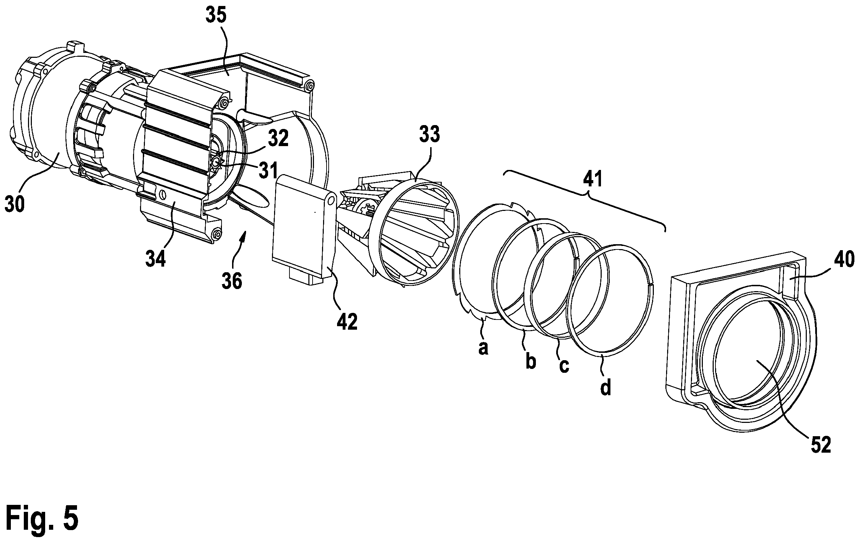

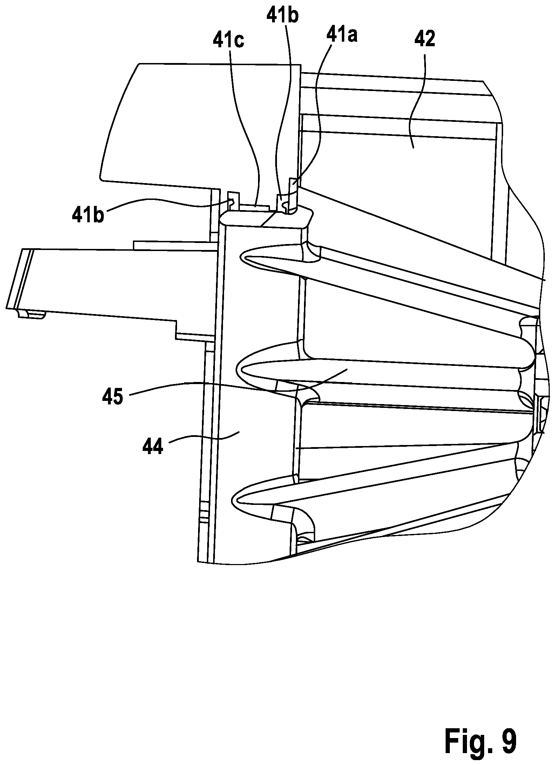

Referring to Figure 5, there is shown the cutter assembly of the shredder, comprising an electric motor and gearbox unit 30 having a rotatable shaft 31 carrying a torque transmission means 32 for transferring torque to the cutter. A cutting element 33 in accordance with the present invention is mounted upon transmission means 32. The cutter assembly includes a housing 34 to contain the cutting element 33 and define a shredding cavity. The housing includes an operatively upper opening or inlet 35 for receipt of vegetation to be shredded and an operatively lower opening or outlet 36 for ejection of shredder vegetation. The housing 34 also includes a cover 40 which acts to hold and support cutting element 33 in position. The cutter is supported by a thrust and radial plain bearing at its proximal end. The distal end bearing supporting the outside diameter of the distal ring should be a low friction bearing due to this large diameter. Rolling contact bearings are not preferred due to cost, space and assembly reasons. A polymer faced low friction bearing 41c has been used satisfactorily. This is illustrated more clearly in Figure 9. Typically constructed of a backing sheet faced with a bronze fibre matrix impregnated with polytetrafluoroethylene (PTFE), such bearings exhibit a remarkably low coefficient of friction, being of the order of 0.05 under test conditions. The bearing is protected by seal elements 41b and scraper ring 41a.

Mounted within housing 34 is a reaction plate 42 against which the cutting surfaces of cutting element 33 bear in operation.

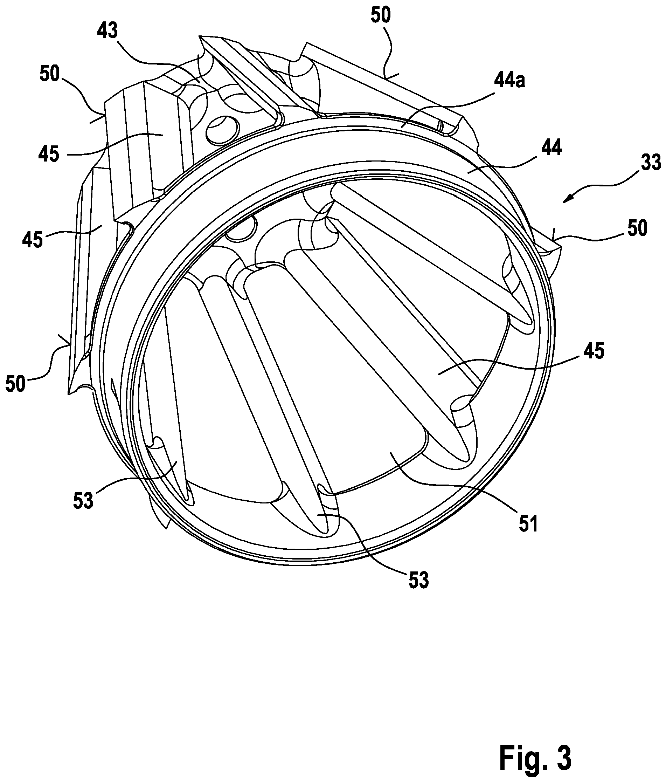

Cutting element 33 is shown in more detail in Figure 3. In the preferred embodiment, the cutting element 33 has a generally frusto-conical configuration having a proximal disc 43 for receipt of transmission means 32 and a distal ring 44 which is supported by and, in use, bears against bearing 41 c in housing cover 40.

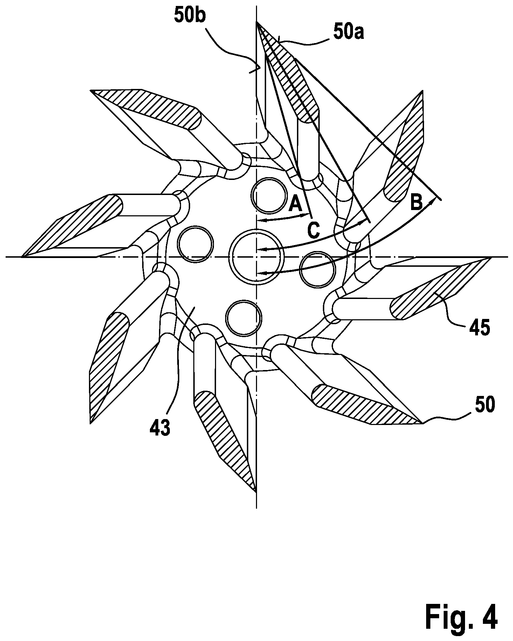

Between disc 43 and ring 44 are a plurality of blades 45 spaced around the periphery of the cutting element each blade having a cutting edge 50 formed between an outer blade surface 50a making an angle B to the radius of the cutter and an inner blade surface 50b making an angle A to the radius of the cutter. Suitably angle B is about 45° and angle A is about 15°. The individual blades 45 are substantially elongate and uniform in cross section and are arranged with the main axis C (Figure 4) of this section at an angle of 20° to 40°, preferably 23° - 37°, to the radius of the cutter. At the distal end the blades are joined to the distal ring with the inclusion of a full circumferential lip 44a to ensure good load spreading. This lip nevertheless does not extend to the full blade outer diameter so as to allow access for grinding or milling both front and rear faces of the blade after heat treatment.

At the proximal end, the blades merge into the proximal disc (again with clearance to enable grinding or milling of the cutting edges) which has a diameter of 70 - 90mm preferably 80mm giving a cone angle of around 15 - 20° per side. The speed of rotation is preferably about 40 rpm and the number of blades 8.

As the cutting element 33 rotates, in use, vegetation such as branches or twigs, entering the shredding cavity is urged in the direction of the reaction plate 42 by virtue of the rotation of the cutting element 33, whereupon blades 45 bear against the reaction plate 42 to cut and tear the fibres of the vegetation. The shredded material is ejected in two ways, from the outlet 36 at the bottom of the shredding cavity and from within the cutting element itself. Shredded vegetation falls between the blades 45 through elongate apertures 51 into the open body of the cutting element 33. Due to the frusto-conical shape of the cutting element, the vegetation is caused to tumble towards the distal end of the cutter where it is ejected through the distal end ring 44 and thence through a central aperture 52 provided in housing end cover 40. In preferred embodiments, blades 45 are provided with projections on a rear edge or surface thereof, which projections 53 project into the open body of the cutting element 33, providing a base to transfer stresses into the rest of the structure of cutting element 33.

For optimal outflow of shredded material it has been found that an inner diameter of the distal ring in the range of 100 - 130mm is particularly advantageous, preferably about 115mm.

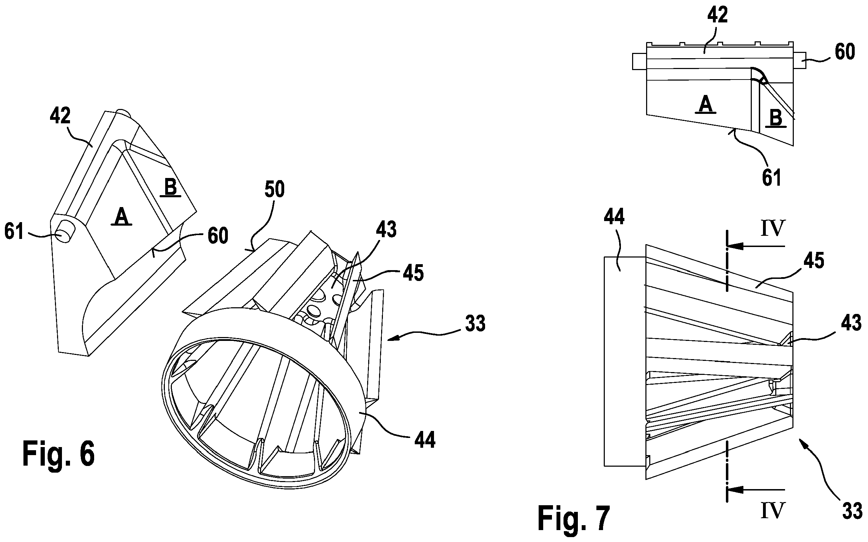

The cutting element 33 and a preferred embodiment of a reaction plate 42 are illustrated further in Figures 6, 7 and 8. Reaction plate 42 is pivotally mounted towards an upper edge thereof by means of a pin 61 about an axis suitably parallel to the axis of rotation of the motor/gearbox output shaft 31. The reaction plate 42 is adjustable into contact with the cutting element by means of an adjusting screw, or other suitable means. The reaction plate 42 has a profiled edge 60 against which blades 45 bear to produce a scissor-like motion, thereby cutting vegetation passing into the shredding cavity.

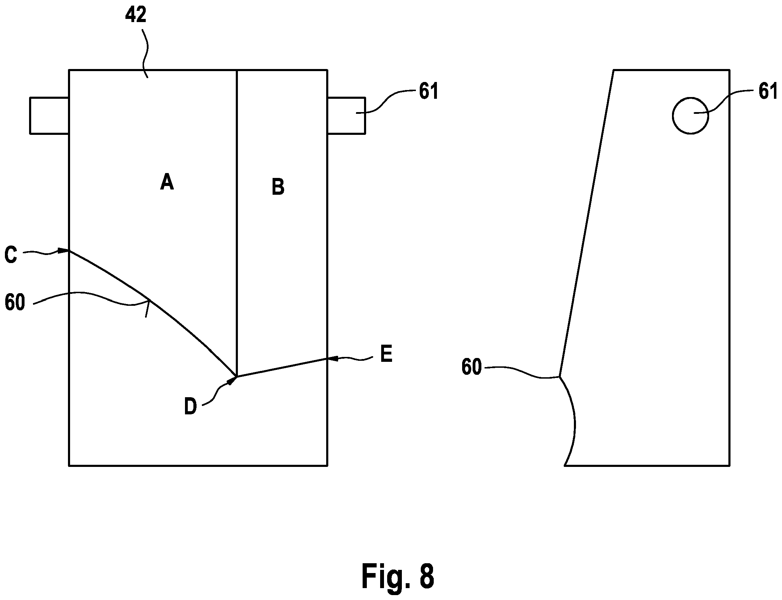

Ordinarily, vegetation is free to slide to either end of the cutting element where wood fibres can wrap around the motor/gearbox output shaft or the chippings produced can have restricted freedom to move and be ejected from the shredding cavity. In these circumstances, blocking of the cutter assembly can occur or a reduced cutting width is produced and thus lower efficacy. Accordingly, in preferred embodiments, the front face of reaction plate 42 is formed with two distinct surfaces, a distal surface A and a proximal surface B, such that their joint intersection with the cutter diameter (line 60) forms a generally "V" shape (see Figure 8). Therefore as the cutter rotates an individual cutter blade first contacts line 60 at the distal end (point C). As the cutter rotates further this point of contact travels along the cutter blade in a scissor like action. At or shortly before the moment when this point of contact reaches point D the other end of the blade also contacts line 60 at the proximal end (point E) producing a second point of contact also travelling simultaneously towards point D as the blade rotates. This action naturally guides vegetation to the optimal position suitably distant from the obstruction of the proximal disc 43 while providing a lower energy scissor cutting action for larger diameters of material. Preferably point D is 15-30mm ideally 20 mm from the proximal end. Preferably the point of intersection to surface A extends over a large degree of cutter rotation (20-35°), preferably about 30°) while for the intersection to surface B the cutter rotation is from 0 to 10°. In an alternative embodiment, not shown, portions A and B are formed as an arcuate surface rather than as two discontinuous portions.

A further advantage of the cutting element of the present invention lies in its method of manufacture and this forms a further aspect of the invention. As the cutting element 33 is formed as a unitary component, we have developed a process for the manufacture of the cutting element by means of investment casting, also known as lost-wax casting. Casting allows the cutting element to be formed as a unitary component with complex shaping, including undercutting as necessary, and requiring little post-casting machining. Following casting, the cutting-element 33 is hardened. Gas carbonitriding is preferred to induction hardening. The casting is formed from steel, preferably a low carbon steel, suitably including alloying elements and having a surface hardness of around 55HRC on the Rockwell C hardness scale, at which level edge chipping is resisted. A molybdenum/chromium/nickel steel suitable for surface hardening is particularly suitable. Vanadium at around 0.15wt% can be included to provide a refined grain structure if required.

## Claims

1. A cutting element (33) for a vegetation shredder, the cutting element (33) comprising a plurality of elongate blades (45) arranged between a proximal (43) and distal (44) support elements, wherein the plurality of elongate blades (45) is configured in a generally frusto-conical form, and the distal support element (44) forming a base of said frusto-conical form, **characterised in that**, the cutting element (33) being a hollow unitary element.

2. A cutting element as claimed in claim 1 wherein the cutting element (33) is formed with elongate apertures (51, 52) between adjacent blades (45).

3. A cutting element (33) as claimed in any one of claims 1 to 2 wherein the distal support element (44) comprises a circumferential ring joining end faces of the elongate blades (45).

4. A cutting element (33) as claimed in any one of claims 1 to 3 wherein each blade has a blade body having an axis at an angle of 20° to 40° to the radius of the cutting element (33), preferably 23° to 37°.

5. A method of manufacturing a vegetation shredder cutting element (33), the method comprising the technique of investment or lost-wax casting, wherein the cutting element (33) comprises a plurality of elongate blades (45) arranged in a generally frusto-conical form between proximal (43) and distal (44) support elements, wherein the distal support elements (44) forming a base of said frusto-conical form, **characterized in that**, the cutting element (33) is formed as a hollow unitary element .

6. A method as claimed in Claim 5 wherein the cutting element is cast from steel, preferably a low carbon steel, more preferably a low carbon surface hardenable alloy steel.

7. A method as claimed in Claim 6 further comprising a step of hardening, preferably gas carbonitriding or induction hardening, more preferably, gas carbonitriding.

8. A vegetation shredder comprising a shredder body (20) housing a shredder cutter assembly within a shredder cutter chamber wherein the shredder body (20) includes a feed inlet (24) for receipt, in use, of vegetation to be shredded, wherein the feed inlet (24) is in operative communication with the shredder cutter chamber by means of a generally elongate feed chute (25); **characterised in that** the shredder cutter assembly comprises a cutting element (33) as defined in any one of claims 1 to 4, and **in that**, the vegetation cutter further comprises a reaction plate (42) having a front face formed as two separate surfaces (A, B) such that their joint intersection with the cutter diameter (CD, DE) generally forms a V-shape.

9. A vegetation shredder as claimed in claim 8 wherein the distal support element (44) is supported by a plain bearing (41c) having a coefficient of friction of 0.1 or less, preferably 0.05 or less.

10. A vegetation shredder as claimed in claim 9 wherein the bearing (41c) is a low friction polymer-faced metal-backed plain bearing.

11. A vegetation shredder as claimed in claim 10 wherein the bearing (41c) is a polytetrafluoroethylene-loaded polymer-faced metal-backed plain bearing.

12. A vegetation shredder as claimed in claim 8 wherein a first surface (A) of the reaction plate (42) has a profile edge (CD) which extends over a degree of cutter rotation of from 20° to 35°, preferably about 30°.

13. A vegetation shredder as claimed in claim 12 wherein a second surface (B) of the reaction plate (42) has a profile edge (DE) which extends over a degree of cutter rotation of from 0° to 10°.

14. A vegetation shredder as claimed in any one of claims 12 to 13 wherein the intersection (D) is provided from 15 to 30mm from the proximal end of the cutting element (33).

## Patentansprüche

1. Schneidelement (33) für einen Gartenhäcksler, wobei das Schneidelement (33) mehrere längliche Messer (45), die zwischen einem proximalen (43) und distalen (44) Tragelement angeordnet sind, umfasst, wobei die mehreren länglichen Messer (45) in einer im Allgemeinen kegelstumpfförmigen Form ausgelegt sind und das distale Tragelement (44) eine Basis der kegelstumpfförmigen Form ausbildet, **dadurch gekennzeichnet, dass** das Schneidelement (33) ein hohles, einstückiges Element ist.

2. Schneidelement nach Anspruch 1, wobei das Schneidelement (33) mit länglichen Öffnungen (51, 52) zwischen angrenzenden Messern (45) ausgebildet ist.

3. Schneidelement (33) nach einem der Ansprüche 1 bis 2, wobei das distale Tragelement (44) einen umlaufenden Ring umfasst, der die Endflächen der länglichen Messer (45) verbindet.

4. Schneidelement (33) nach einem der Ansprüche 1 bis 3, wobei jedes Messer einen Messerkörper aufweist, der eine Achse in einem Winkel von 20° bis 40° zum Radius des Schneidelements (33), vorzugsweise von 23° bis 37°, aufweist.

5. Verfahren zur Herstellung eines Gartenhäckslerschneidelements (33) wobei das Verfahren die Technik des Feingießens oder Ausschmelzgießens umfasst, wobei das Schneidelement (33) mehrere längliche Messer (45) umfasst, die in einer im Allgemeinen kegelstumpfförmigen Form zwischen dem proximalen (43) und distalen (44) Tragelement angeordnet sind, wobei die distalen Tragelemente (44) eine Basis der kegelstumpfförmigen Form ausbilden, **dadurch gekennzeichnet, dass** das Schneidelement (33) als hohles, einstückiges Element ausgebildet ist.

6. Verfahren nach Anspruch 5, wobei das Schneidelement aus Stahl, vorzugsweise einem kohlenstoffarmen Stahl, weiter bevorzugt einer kohlenstoffarmen oberflächenhärtbaren Stahllegierung gegossen ist.

7. Verfahren nach Anspruch 6, ferner einen Schritt des Härtens umfassend, vorzugsweise Gas-Carbonitrierung oder Induktionshärten, weiter bevorzugt Gas-Carbonitrierung.

8. Gartenhäcksler, einen Häckslerkörper (20) umfassend, der eine Häckslerschneidanordnung innerhalb einer Häckslerschneidkammer enthält, wobei der Häckslerkörper (20) einen Einfülleinlass (24) zur Aufnahme von zu zerkleinernden Gartenabfällen bei der Verwendung enthält, wobei der Einfülleinlass (24) mit der Häckslerschneidkammer mittels eines im Allgemeinen länglichen Einfülltrichters (25) wirkverbunden ist; **dadurch gekennzeichnet, dass** die Häckslerschneidanordnung ein Schneidelement (33) nach einem der Ansprüche 1 bis 4 umfasst, und dass der Gartenhäcksler ferner eine Reaktionsplatte (42) umfasst, die eine Stirnfläche aufweist, die als zwei getrennte Flächen (A, B) ausgebildet ist, sodass deren Schnittstelle mit dem Schneiddurchmesser (CD, DE) im Allgemeinen V-förmig ist.

9. Gartenhäcksler nach Anspruch 8, wobei das distale Tragelement (44) von einem Gleitlager (41c) gelagert wird, das einen Reibungskoeffizienten von 0,1 oder weniger, vorzugsweise von 0,05 oder weniger, aufweist.

10. Gartenhäcksler nach Anspruch 9, wobei das Lager (41c) ein reibungsarmes Gleitlager mit einer Stirnseite aus einem Polymer und einer Rückseite aus Metall ist.

11. Gartenhäcksler nach Anspruch 10, wobei das Lager (41c) ein Gleitlager mit einer Stirnseite aus einem mit Polytetrafluorethylen angereicherten Polymer und einer Rückseite aus Metall ist.

12. Gartenhäcksler nach Anspruch 8, wobei eine erste Fläche (A) der Reaktionsplatte (42) eine Profilkante (CD) aufweist, die sich über einen Grad der Schneidelementdrehung von 20° bis 35°, vorzugsweise von etwa 30°, erstreckt.

13. Gartenhäcksler nach Anspruch 12, wobei eine zweite Fläche (B) der Reaktionsplatte (42) eine Profilkante (DE) aufweist, die sich über einen Grad der Schneidelementdrehung von 0° bis 10° erstreckt.

14. Gartenhäcksler nach einem der Ansprüche 12 bis 13, wobei die Schnittstelle (D) von 15 bis 30 mm vom proximalen Ende des Schneidelements (33) vorgesehen ist.

## Revendications

1. Élément de coupe (33) pour une déchiqueteuse de végétaux, l'élément de coupe (33) comprenant une pluralité de lames allongées (45) disposées entre des éléments de support proximal (43) et distal (44), la pluralité de lames allongées (45) étant configurées avec une forme généralement tronconique et l'élément de support distal (44) formant une base de ladite forme tronconique, **caractérisé en ce que** l'élément de coupe (33) est un élément unitaire creux.

2. Élément de coupe selon la revendication 1, l'élément de coupe (33) étant formé avec des ouvertures allongées (51, 52) entre des lames adjacentes (45).

3. Élément de coupe (33) selon l'une quelconque des revendications 1 et 2, dans lequel l'élément de support distal (44) comprend une bague circonférentielle joignant des faces d'extrémité des lames allongées (45).

4. Élément de coupe (33) selon l'une quelconque des revendications 1 à 3, dans lequel chaque lame a un corps de lame ayant un axe suivant un angle de 20° à 40° par rapport au rayon de l'élément de coupe (33), de préférence de 23° à 37°.

5. Procédé de fabrication d'un élément de coupe (33) d'une déchiqueteuse de végétaux, le procédé comprenant la technique de coulée par moulage de précision ou à la cire perdue, l'élément de coupe (33) comprenant une pluralité de lames allongées (45) disposées sous forme généralement tronconique entre des éléments de support proximaux (43) et distaux (44), les éléments de support distaux (44) formant une base de ladite forme tronconique, **caractérisé en ce que** l'élément de coupe (33) est formé sous forme d'élément creux unitaire.

6. Procédé selon la revendication 5, dans lequel l'élément de coupe est coulé à partir d'acier, de préférence d'acier à faible teneur en carbone, de préférence d'acier allié durcissable à surface à faible teneur en carbone.

7. Procédé selon la revendication 6, comprenant en outre une étape de durcissement, de préférence de durcissement par induction ou carbonitruration à gaz, plus préférablement à carbonitruration à gaz.

8. Déchiqueteuse de végétaux comprenant un corps de déchiqueteuse (20) recevant un ensemble de couteaux de déchiqueteuse à l'intérieur d'une chambre de couteaux de déchiqueteuse, le corps de déchiqueteuse (20) comportant une entrée d'alimentation (24) pour recevoir, pendant l'utilisation, les végétaux à déchiqueter, l'entrée d'alimentation (24) étant en communication fonctionnelle avec la chambre de couteaux de déchiqueteuse au moyen d'une trémie d'alimentation généralement allongée (25) ; **caractérisée en ce que** l'ensemble de couteaux de déchiqueteuse comprend un élément de coupe (33) tel que défini dans l'une quelconque des revendications 1 à 4, et **en ce que** le couteau de végétaux comprend en outre une plaque de réaction (42) ayant une face avant formée sous forme de deux surfaces séparées (A, B) de telle sorte que leur intersection commune avec le diamètre du couteau (CD, DE) forme généralement une forme en V.

9. Déchiqueteuse de végétaux selon la revendication 8, dans laquelle l'élément de support distal (44) est supporté par un palier lisse (41c) ayant un coefficient de friction de 0,1 ou moins, de préférence de 0,05 ou moins.

10. Déchiqueteuse de végétaux selon la revendication 9, dans laquelle le palier (41c) est un palier lisse à faible friction doublé de métal recouvert de polymère.

11. Déchiqueteuse de végétaux selon la revendication 10, dans laquelle le palier (41c) est un palier lisse doublé de métal recouvert de polymère chargé avec du polytétrafluoroéthylène.

12. Déchiqueteuse de végétaux selon la revendication 8, dans laquelle une première surface (A) de la plaque de réaction (42) présente un bord profilé (CD) qui s'étend sur une plage de rotation des couteaux de 20° à 35°, de préférence d'environ 30°.

13. Déchiqueteuse de végétaux selon la revendication 12, dans laquelle une deuxième face (B) de la plaque de réaction (42) présente un bord profilé (DE) qui s'étend sur une plage de rotation des couteaux de 0° à 10°.

14. Déchiqueteuse de végétaux selon l'une quelconque des revendications 12 et 13, dans laquelle l'intersection (D) est prévue à 15 à 30 mm de l'extrémité proximale de l'élément de coupe (33).
